# EUROPÄISCHE PATENTSCHRIFT

(11) **EP 3 406 860 B1**
(45) Veröffentlichungstag und Bekanntmachung des Hinweises auf die Patenterteilung: **27.11.2019**
(21) Anmeldenummer: 18170482.6
(22) Anmeldetag: 03.05.2018
(51) Int. Cl.: F01D 21/04

(54) **TURBOFANTRIEBWERK**
TURBOFAN ENGINE
TURBORÉACTEUR

(30) Priorität: 09.05.2017 DE 102017109940
(43) Veröffentlichungstag der Anmeldung: 28.11.2018
(73) Patentinhaber: Rolls-Royce Deutschland Ltd & Co KG, 15827 Blankenfelde-Mahlow (DE)
(72) Erfinder: Petersen, Björn, 15827 Blankenfelde-Mahlow (DE)
(74) Vertreter: Müller, Wolfram Hubertus

(56) Entgegenhaltungen:
- EP-A1- 1 659 266
- US-A1- 2013 058 775
- US-B1- 8 517 670
- US-B2- 8 721 260

## Beschreibung

Die Erfindung betrifft ein Turbofantriebwerk gemäß dem Oberbegriff des Patentanspruchs 1.

Es ist bekannt, den Fan eines Turbofantriebwerks durch eine auf der Achse des Turbofantriebwerks angeordnete Niederdruckwelle anzutreiben, die den Fan mit einer Niederdruckturbine des Turbofantriebwerks koppelt. Dieser Antrieb kann direkt oder unter Zwischenschaltung eines Übersetzungsgetriebes erfolgen. Im Falle eines Bruchs der Niederdruckwelle sind Maßnahmen erforderlich, die das Turbofantriebwerk gegen ein axiales Lösen des Fans vom Triebwerk sichern.

Hierzu ist es beispielsweise aus der US 8 721 260 B2 bekannt, den Fan über eine zweite Fan-Welle axial zu sichern, die eine Verbindung der Fan-Niederdruckwelle mit einem axial hinteren Punkt der Niederdruckwelle bereitstellt. Aufgrund der Notwendigkeit einer zusätzlichen Welle und deren Befestigung an der Fan-Welle ist eine solche Lösung allerdings aufwendig und gewichtsintensiv. Darüber hinaus greift sie nur dann, wenn die Niederdruckwelle bricht, nicht aber, wenn die Fanscheibe bricht.

Der vorliegenden Erfindung liegt die Aufgabe zu Grunde, eine Fansicherung gegen ein axiales Lösen eines Fans bei Wellenbruch bereitzustellen, die auch bei einem Bruch der Fanscheibe ein Lösen des Fans vom Triebwerk verhindert.

Diese Aufgabe wird erfindungsgemäß durch ein Turbofantriebwerk mit den Merkmalen des Anspruchs 1 gelöst. Ausgestaltungen der Erfindung sind in den Unteransprüchen angegeben.

Danach sieht die vorliegende Erfindung vor, dass ein stromabwärtiger Abschnitt der Fanscheibe eine Mehrzahl erster Verriegelungsabschnitte aufweist, die in Umfangsrichtung zueinander beabstandet sind. Weiter weist ein stromaufwärtiger Abschnitt eines nichtrotierenden, stromabwärts der Fanscheibe angeordneten Bauteils eine Mehrzahl zweiter Verriegelungsabschnitte auf, die ebenfalls in Umfangsrichtung zueinander beabstandet sind. Dabei ist vorgesehen, dass die ersten und die zweiten Verriegelungsabschnitte derart ausgebildet und zueinander angeordnet sind, dass die ersten und die zweiten Verriegelungsabschnitte im Normalbetrieb außer Eingriff stehen, wobei die ersten Verriegelungsabschnitte eine stromabwärtigere axiale Position aufweisen als die zweiten Verriegelungsabschnitte. Weiter sind die ersten und die zweiten Verriegelungsabschnitte derart ausgebildet und zueinander angeordnet, dass im Falle eines Bruchs der Niederdruckwelle oder der Fanscheibe, wenn die Fanscheibe sich in axialer Richtung stromaufwärts verschiebt, die ersten Verriegelungsabschnitte mit den zweiten Verriegelungsabschnitte in Kontakt treten und sich an diese anlegen, wodurch eine axiale Verschiebung der Fanscheibe bzw. des Fans insgesamt verhindert wird.

Die Erfindung stellt damit eine Fansicherung bereit, die ohne eine zusätzliche mechanische Verbindung der Fanscheibe mit einem axial hinteren Punkt der Niederdruckwelle auskommt. Darüber hinaus ermöglicht die Erfindung eine Fansicherung auch für den Fall, dass die Fanscheibe bricht. Die Erfindung basiert dabei auf dem Gedanken, im Falle des Bruchs der Niederdruckwelle oder der Fanscheibe eine Fansicherung durch ein Ineinandergreifen von Elementen der Fanscheibe mit Elementen des nicht rotierenden Bauteils bereitzustellen, das stromabwärts des Fans bzw. der Fanscheibe angeordnet ist.

Der stromabwärtige Abschnitt der Fanscheibe, der die Mehrzahl erster Verriegelungsabschnitte aufweist, kann ein integraler Bestandteil der Fanscheibe oder alternativ eine Struktur sein, die mit der Fanscheibe verbunden ist und dabei eine stromabwärtige Erweiterung der Fanscheibe bildet.

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei identisch mit der Maschinenachse des Turbofan-Triebwerks, in dem die Erfindung realisiert ist. Von der x-Achse ausgehend zeigt die radiale Richtung radial nach außen. Begriffe wie "vor", "hinter", "vordere" und "hintere" beziehen sich immer auf die axiale Richtung bzw. die Strömungsrichtung im Triebwerk. Die Bezeichnung "vor" bedeutet somit "stromaufwärts" und die Bezeichnung "hinter" bedeutet "stromabwärts". Begriffe wie "äußere" oder "innere" beziehen sich immer auf die radiale Richtung.

Eine Ausgestaltung der Erfindung sieht vor, dass die ersten Verriegelungsabschnitte und die zweiten Verriegelungsabschnitte jeweils schräg zu einer Ebene ausgerichtet sind, die senkrecht zur Maschinenachse des Turbofantriebwerks verläuft. Die Verriegelungsabschnitte verlaufen somit nicht exakt in Umfangsrichtung, sondern unter einem spitzen Winkel zur Umfangsrichtung. Durch Schrägstellung der Verriegelungsabschnitte wird erreicht, dass die ersten Verriegelungsabschnitte bei der Montage in eine stromabwärtigere axiale Position als die zweiten Verriegelungsabschnitte gebracht werden können, ohne dass der Abstand in Umfangsrichtung zwischen den zweiten Verriegelungsabschnitten größer ist als die Länge in Umfangsrichtung der ersten Verriegelungsabschnitte (für welchen Fall eine Sicherung gegen ein axiales Verschieben nicht möglich wäre, da die ersten Verriegelungsabschnitte der Fanscheibe in diesem Fall in axialer Richtung an den zweiten Verriegelungsabschnitte vorbeigeführt werden könnten, ohne dass die ersten und die zweiten Verriegelungsabschnitte in Eingriff geraten). Aufgrund der Schrägstellung können bei der Montage die ersten Verriegelungsabschnitte schräg an den zweiten Verriegelungsabschnitte vorbei und axial hinter diese geführt werden.

Dabei ist vorgesehen, dass die ersten Verriegelungsabschnitte der Fanscheibe und die zweiten Verriegelungsabschnitte des nichtrotierenden Bauteils im Wesentlichen um den gleichen Winkel (d.h. um den gleichen Winkel oder ähnliche Winkel, z.B. mit einer Abweichung kleinergleich 2°) schräg zu der Ebene verlaufen, die senkrecht zur Maschinenachse verläuft. Hierdurch wird erreicht, dass sie im Falle eines Bruchs über eine große oder ihre gesamte Fläche aneinander zur Anlage kommen und die Fanscheibe sicher zurückgehalten wird. Der genannte Winkel liegt beispielsweise zwischen 5° und 45°, insbesondere zwischen 10° und 30°.

Eine weitere Ausgestaltung der Erfindung sieht vor, dass die ersten Verriegelungsabschnitte und die zweiten Verriegelungsabschnitte jeweils als erste und zweite Wandabschnitte ausgebildet sind, die sich jeweils schräg zur Umfangsrichtung und in radialer Richtung erstrecken. Die Wandabschnitte stellen dabei sich in radialer Richtung erstreckende wandartige Platten dar. Diese sind in einem spitzen Winkel zur Umfangsrichtung ausgerichtet. Die ersten Wandabschnitte sind dabei untereinander parallel ausgerichtet und die zweiten Wandabschnitte sind untereinander ebenfalls parallel ausgerichtet. Gleichzeitig sind die ersten Wandabschnitte im montierten Zustand zu den zweiten Wandabschnitten parallel ausgerichtet.

Da die ersten und zweiten Verriegelungsabschnitte jeweils an einem ringförmigen dreidimensionalen Objekt ausgebildet sind, ist der Begriff "parallel" dahingehend zu verstehen, dass eine Parallelität bei dem gedanklich aufgeschnittenen und in einer Ebene ausgerollten Ring vorliegt (abgerollter Radialschnitt).

Eine Ausgestaltung der Erfindung sieht vor, dass die ersten Verriegelungsabschnitte an einem ersten Steg ausgebildet sind, der in axialer Richtung in stromabwärtiger Richtung von der Fanscheibe absteht. Die ersten Verriegelungsabschnitte erstrecken sich dabei ausgehend von dem ersten Steg radial nach außen.

Weiter kann vorgesehen sein, dass die zweiten Verriegelungsabschnitte sich von einer strömungspfadbegrenzenden Struktur des nichtrotierenden Bauteils radial nach innen erstrecken.

Die radialen Orientierungen der ersten und zweiten Verriegelungsabschnitte können jedoch auch umgekehrt sein. So sieht eine alternative Ausgestaltung der Erfindung vor, dass die ersten Verriegelungsabschnitte an einem ersten Steg ausgebildet sind, der in axialer Richtung in stromabwärtiger Richtung von der Fanscheibe absteht. Die ersten Verriegelungsabschnitte erstrecken sich dabei ausgehend von dem ersten Steg radial nach innen. Dementsprechend kann weiter vorgesehen sein, dass die zweiten Verriegelungsabschnitte sich von einer Struktur des nichtrotierenden Bauteils radial nach außen erstrecken.

Eine weitere Ausgestaltung sieht vor, dass die Fanscheibe einen in axialer Richtung stromabwärts vorstehenden zweiten Steg ausbildet, der radial außen (d.h. radial außerhalb) der zweiten Verriegelungsabschnitte angeordnet ist und an die strömungspfadbegrenzende Struktur des nichtrotierenden Bauteils axial angrenzt. Dies ist mit zwei Vorteilen verbunden. Zum einen bildet der zweite Steg in dem axialen Bereich, in dem er sich erstreckt, die nabenseitige Berandung des Strömungspfads durch den Fan, so dass Verwirbelungen im Bereich der ersten und zweiten Verriegelungsabschnitte verhindert werden. Zum anderen wird durch die Ausbildung des zweiten Stegs radial außen der zweiten Verriegelungsabschnitte verhindert, dass im Falle eines Wellen- oder Fanscheibenbruchs die zweiten Verriegelungsabschnitte radial ausbrechen können.

Da die ersten und die zweiten Verriegelungsabschnitte an der Fanscheibe bzw. an einem hinter der Fanscheibe angeordneten Bauteil angeordnet sind, das den Strömungskanal hinter dem Fan radial innen begrenzt, verlaufen sie jeweils ringförmig.

Eine Ausgestaltung der Erfindung sieht vor, dass die ersten Verriegelungsabschnitte und die zweiten Verriegelungsabschnitts jeweils derart ausgerichtet und in Umfangsrichtung beabstandet sind, dass die ersten Verriegelungsabschnitte zur Montage in schräger Richtung zwischen den zweiten Verriegelungsabschnitten hindurch schiebbar sind, so dass im Normalbetrieb die ersten Verriegelungsabschnitte eine stromabwärtigere axiale Position aufweisen als die zweiten Verriegelungsabschnitte. Diese Art von Montage ist durch die Schrägstellung der ersten und zweiten Verriegelungsabschnitte ermöglicht. Dabei wird darauf hingewiesen, dass die ersten Verriegelungsabschnitte mit einer Bewegungsrichtung, deren Komponente in Umfangsrichtung gleich der Rotationrichtung des Fans im Betrieb ist, zwischen den zweiten Verriegelungsabschnitten hindurchgeschoben werden. Zur Entkopplung der Verriegelungsabschnitte wäre es daher notwendig, die Fanscheibe entgegen der Rotationrichtung zu drehen. Da dies nach einem Wellen- oder Fanscheibenbruch offensichtlich nicht der Fall ist, wird ausgeschlossen, dass die ersten Verriegelungsabschnitte und die zweiten Verriegelungsabschnitte nach einer Bruchsituation voneinander getrennt werden, ohne dass die jeweiligen Verriegelungsabschnitte miteinander in Eingriff geraten.

Die Erfindung sieht vor, dass die ersten Verriegelungsabschnitte und die zweiten Verriegelungsabschnitte jeweils derart in Umfangsrichtung beabstandet sind, dass sich ein erster Verriegelungsabschnitt und dazu axial beabstandeter zweiter Verriegelungsabschnitt bei Betrachtung in axialer Richtung stromaufwärts in Umfangsrichtung zu jedem Zeitpunkt zumindest teilweise überlappen. Durch diese Überlappung wird gerade verhindert, dass die ersten Verriegelungsabschnitte und die zweiten Verriegelungsabschnitte sich durch ein axiales Verschieben des Fans bzw. der Fanscheibe wieder entflechten können.

Die Erfindung sieht gemäß einer Ausgestaltung vor, dass die ersten Verriegelungsabschnitte in Umfangsrichtung jeweils äquidistant zueinander angeordnet sind. Gleiches gilt für die zweiten Verriegelungsabschnitte. Auch kann vorgesehen sein, dass die ersten Verriegelungsabschnitte in Umfangsrichtung alle die gleiche Länge haben und dass die zweiten Verriegelungsabschnitte in Umfangsrichtung alle die gleiche Länge haben.

Weiter wird darauf hingewiesen, dass die Länge der ersten Verriegelungsabschnitte in Umfangsrichtung unterschiedlich sein kann zur Länge der zweiten Verriegelungsabschnitte in Umfangsrichtung. Insbesondere ist in einer Ausgestaltung der Erfindung vorgesehen, dass die Länge der ersten Verriegelungsabschnitte in Umfangsrichtung kleiner ist als die Länge der zweiten Verriegelungsabschnitte in Umfangsrichtung, damit das rotierende Bauteil, das die ersten Verriegelungsabschnitte trägt (d.h. die Fanscheibe), gewichtsmäßig minimiert werden kann. Grundsätzlich kann aber auch vorgesehen sein, dass die Länge der ersten Verriegelungsabschnitte in Umfangsrichtung größer ist als die Länge der zweiten Verriegelungsabschnitte in Umfangsrichtung oder dass diese Längen gleich sind.

Gemäß einer Ausgestaltung der Erfindung sind die ersten Verriegelungsabschnitte an der axial hinteren Stirnseite der Fanscheibe ausgebildet. Die zweiten Verriegelungsabschnitte sind an der axial vorderen Stirnseite des nicht rotierenden, stromabwärts der Fanscheibe angeordneten Bauteils ausgebildet. Der stromabwärtige Abschnitt der Fanscheibe, der die ersten Verriegelungsabschnitte aufweist, und der stromaufwärtige Abschnitt des nichtrotierenden Bauteils, der die zweiten Verriegelungsabschnitte aufweist, bilden des Weiteren gemäß einer Ausgestaltung der Erfindung eine Schnittstelle zwischen der Fanscheibe und dem nichtrotierenden Bauteil, die nabennah, d.h. in einem radialen Bereich, der an die Fannabe bzw. eine strömungspfadbegrenzende Struktur des nichtrotierenden Bauelements angrenzt, ausgebildet ist.

Eine weitere Ausgestaltung der Erfindung sieht vor, dass die ersten Verriegelungsabschnitte einstückig mit der Fanscheibe ausgebildet sind. Grundsätzlich kann es sich jedoch auch um Elemente handeln, die mit der Fanscheibe verbunden sind, beispielsweise über Bolzen oder Schrauben.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Turbofantriebwerks, in dem die vorliegende Erfindung realisierbar ist;
- Figur 2: ein Ausführungsbeispiel einer Fansicherung gemäß dem Stand der Technik;
- Figur 3: im Längsschnitt ein Ausführungsbeispiel einer Fansicherung mit ersten Verriegelungsabschnitten und zweiten Verriegelungsabschnitte, wobei der Normalbetrieb dargestellt ist, in dem die ersten Verriegelungsabschnitte und die zweiten Verriegelungsabschnitte außer Eingriff stehen;
- Figur 4: im abgerollten Radialschnitt schematisch das Ausführungsbeispiel der Figur 3 bei Montage der Fansicherung, wobei die ersten und zweiten Verriegelungsabschnitte flach ausgebreitet dargestellt sind;
- Figur 5: im abgerollten Radialschnitt schematisch das Ausführungsbeispiel der Figur 3 im Normalbetrieb, wobei die ersten und zweiten Verriegelungsabschnitte flach ausgebreitet dargestellt sind;
- Figur 6: im abgerollten Radialschnitt schematisch das Ausführungsbeispiel der Figur 3 nach einem Wellenbruch, wobei die ersten und zweiten Verriegelungsabschnitte flach ausgebreitet dargestellt sind;
- Figur 7: das Ausführungsbeispiel der Figur 3 bei einer Ansicht in axialer Richtung stromaufwärts in einem Betriebszustand des Systems, in dem die ersten Verriegelungsabschnitte und die zweiten Verriegelungsabschnitte in Umfangsrichtung einander vollständig überlappen; und
- Figur 8: ein abgewandeltes Ausführungsbeispiel bei einer Ansicht in axialer Richtung stromaufwärts in einem Betriebszustand des Systems, in dem die ersten Verriegelungsabschnitte und die zweiten Verriegelungsabschnitte in Umfangsrichtung einander teilweise überlappen.

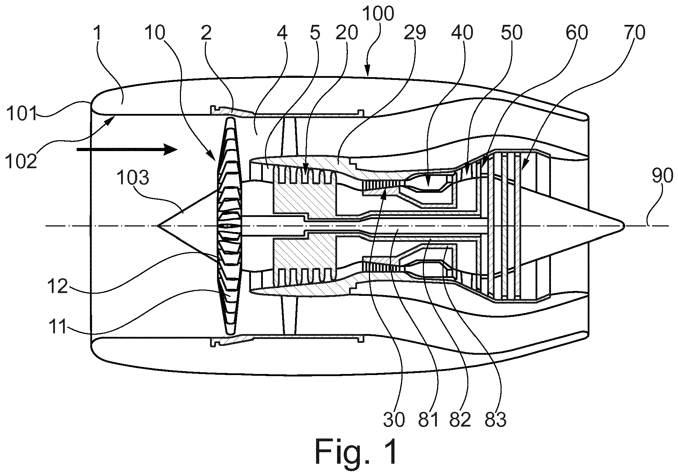

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist. Das Turbofantriebwerk kann dabei einen Getriebefan aufweisen, wobei der Fan über ein Getriebe mit der Niederdruckwelle verbunden ist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 weist eine Triebwerksgondel 1 auf, die eine Einlauflippe 101 umfasst und innenseitig einen Triebwerkseinlauf 102 ausbildet, der einströmende Luft dem Fan 10 zuführt. Der Fan 10 weist eine Mehrzahl von Fanschaufeln 11 auf, die mit einer Fanscheibe 12 verbunden sind. Der Annulus der Fanscheibe 12 bildet dabei die radial innere Begrenzung des Strömungspfads durch den Fan 10. Radial außen wird der Strömungspfad durch ein Fangehäuse 2 begrenzt. Stromaufwärts der Fanscheibe 12 ist ein Nasenkonus 103 angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk (Gasturbine), das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5, der auch als Hauptströmungskanal bezeichnet wird. Der Sekundärstromkanal 4, auch als Nebenstromkanal oder Bypass-Kanal bezeichnet, leitet im Betrieb des Turbofantriebwerks 100 vom Fan 10 angesaugte Luft am Kerntriebwerk vorbei.

Die beschriebenen Komponenten besitzen eine gemeinsame Rotations- bzw. Maschinenachse 90. Die Rotationsachse 90 definiert eine axiale Richtung des Turbofantriebwerks. Eine radiale Richtung des Turbofantriebwerks verläuft senkrecht zur axialen Richtung.

Im Kontext der vorliegenden Erfindung ist eine Sicherung des Fans 10 gegen ein stromaufwärts gerichtetes axiales Lösen im Falle eines Bruchs der Niederdruckwelle 81 oder der Fanscheibe 12 von Bedeutung.

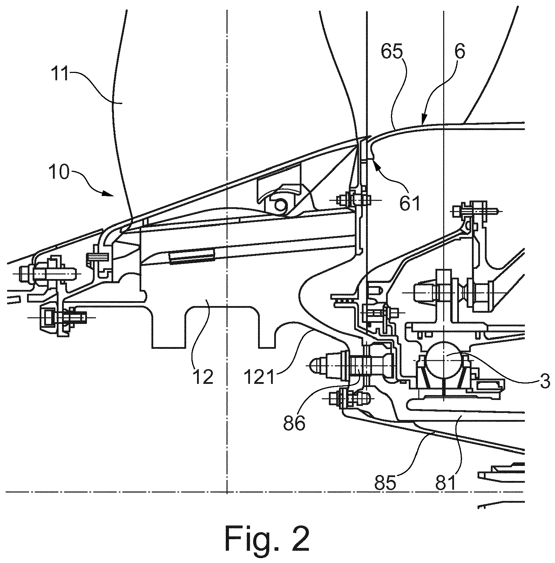

Die Figur 2 zeigt zum besseren Verständnis des Hintergrunds der vorliegenden Erfindung eine Fansicherung gemäß dem Stand der Technik des Triebwerks BR710. Dargestellt ist ein vorderer Teil des Turbofantriebwerks. Ein Fan 10 weist eine Fanscheibe 12 auf, die über Befestigungselemente 86 mit einer Niederdruckwelle 81 gekoppelt ist. Zur Lagerung der Niederdruckwelle 81 ist ein vorderes Lager 3 dargestellt. Die Fanscheibe 12 bildet an ihrem radial äußeren Rand eine Fannabe aus, die den Strömungskanal durch den Fan 10 radial innen begrenzt. Eine Mehrzahl von Fanschaufeln 11 erstrecken sich von der Fannabe radial nach außen in den Strömungskanal. Die Fanschaufeln 11 können einstückig mit der Fanscheibe 12 ausgebildet sein oder, wie im dargestellten Ausführungsbeispiel, Schaufelfüße aufweisen, die in entsprechenden Aufnahmen der Fanscheibe angeordnet sind.

Um zu verhindern, dass der Fan 10 im Falle eines Bruchs der Niederdruckwelle 81 in axialer Richtung nach vorne wandert, ist eine zusätzliche Welle 85 vorgesehen, die ebenfalls mit der Fanscheibe 12 verbunden ist und die eine Fan-Haltevorrichtung insofern darstellt, als sie zusätzlich mit einem axial hinteren Punkt der Niederdruckwelle 81 gekoppelt ist, so dass eine zusätzliche axiale Sicherung vorliegt. Keine Sicherung stellt die zusätzliche Welle 85 allerdings für den Fall dar, dass ein Bruch der Fanscheibe 12 erfolgt, beispielsweise in der Figur 2 ein Bruch von Komponenten 121 der Fanscheibe 12, über die eine Verbindung der Fanscheibe 12 mit der Niederdruckwelle 81 erfolgt.

Die Figur 2 zeigt auch ein nichtrotierendes Bauteil 6 des Triebwerks, das stromabwärts der Fanscheibe 12 angeordnet ist. Dieses Bauteil 6 umfasst eine strömungspfadbegrenzende Komponente 65, die hinter dem Fan 10 den Strömungskanal radial innen begrenzt. Darüber hinaus kann es strukturelle Aufgaben erfüllen. Es handelt sich bei dem Bauteil 6 beispielsweise um ein Leitrad ins Kerntriebwerk.

Die an die Fannabe angrenzende Schnittstelle 61 zwischen dem nichtrotierenden Bauteil 6 und der rotierenden Fanscheibe 12 ist dadurch gekennzeichnet, dass die aneinander angrenzenden Komponenten der jeweiligen Bauteile ausreichende Sicherheitsabstände aufweisen, um im Falle einer axialen Verschiebung beispielsweise aufgrund von Temperaturänderungen einen mechanischen Kontakt zwischen der Fanscheibe 12 und dem nichtrotierenden Bauteil 6 sicher auszuschließen.

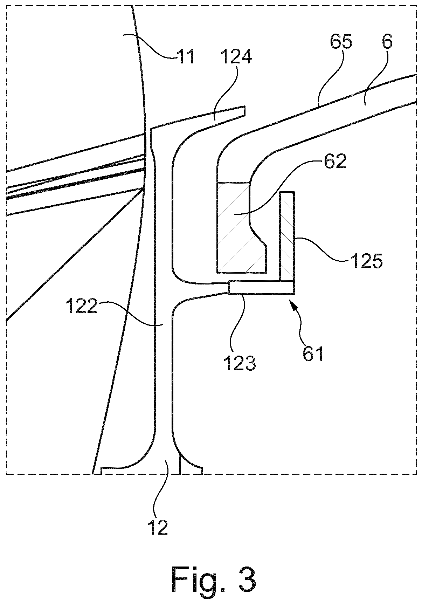

Die erfindungsgemäße Sicherung des Fans 10 gegen ein axiales Verschieben im Falle eines Bruchs der Niederdruckwelle 81 oder eines Bruchs der Fanscheibe 12 erfolgt durch eine bestimmte Ausgestaltung der Schnittstelle 61 zwischen der Fanscheibe 12 und dem stromabwärts der Fanscheibe 12 angeordneten, nichtrotierenden Bauteil 6 (vgl. Figur 2). Die Figur 3 zeigt eine solche Schnittstelle 61. Der Fan und die Verbindung der Niederdruckwelle mit der Fanscheibe können ansonsten entsprechend der Figur 2 ausgebildet sein, wobei erfindungsgemäß keine zusätzliche Welle (Welle 85 der Figur 2) vorgesehen ist und die axiale Sicherung des Fans stattdessen durch die besondere Ausgestaltung der Schnittstelle 61 bereitgestellt ist.

Gemäß der Figur 3 bildet die Fanscheibe 12 einen stromabwärtigen, sich im Wesentlichen radial erstreckende Abschnitt 122 aus, von dem sich in axialer Richtung stromabwärts ein erster Steg 123 und radial beabstandet dazu ein zweiter Steg 124 erstrecken. Der zweite Steg 124 bildet in dem axialen Abschnitt, in dem er sich erstreckt, die radial innere Begrenzung des Strömungskanals aus.

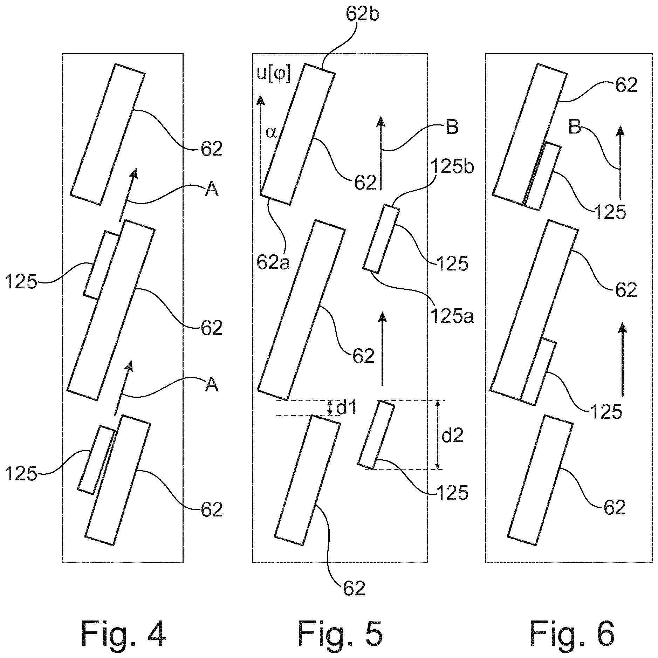

Der erste Steg 123 trägt an seinem axial hinteren Ende eine Mehrzahl erster Verriegelungsabschnitte 125, die als sich in radialer Richtung erstreckende erste Wandabschnitte ausgebildet sind, die jeweils schräg zu Umfangsrichtung verlaufen, wie anhand der Figuren 4-6 noch näher erläutert werden wird. Die Verriegelungsabschnitte 125 sind dabei in Umfangsrichtung beabstandet, wobei der Abstand äquidistant sein kann. Die Verriegelungsabschnitte 125 erstrecken sich ausgehend von dem ersten Steg 123 radial nach außen.

Das nichtrotierende Bauteil 6 weist axial angrenzend an den zweiten Steg 124 eine strömungspfadbegrenzende Komponente 65 auf. An ihrem stromaufwärtigen Ende bildet diese eine Mehrzahl zweiter Verriegelungsabschnitte 62 aus, die als sich in radialer Richtung erstreckende zweite Wandabschnitte ausgebildet sind, die ebenfalls schräg zu Umfangsrichtung ausgerichtet sind. Die einzelnen Verriegelungsabschnitte 62 sind ebenfalls in Umfangsrichtung zueinander beabstandet, insbesondere äquidistant beabstandet. Sie erstrecken sich dabei ausgehend von der strömungspfadbegrenzenden Komponente 65 radial nach innen.

Die Figur 3 zeigt die Anordnung der ersten Verriegelungsabschnitte 125 und der zweiten Verriegelungsabschnitte 62 im Normalbetrieb. Im Normalbetrieb stehen die ersten und die zweiten Verriegelungsabschnitte 125, 62 außer Eingriff. Dabei verhält es sich so, dass die ersten Verriegelungsabschnitte 125 eine stromabwärtigere axiale Position aufweisen als die zweiten Verriegelungsabschnitte 62. So sind die zweiten Verriegelungsabschnitte 62, was ihre axiale Position angeht, zwischen dem stromabwärtigen Abschnitt 122 der Fanscheibe 12 und den ersten Verriegelungsabschnitten 125 angeordnet. Was ihre radiale Position angeht, so befinden sie sich zwischen dem ersten Steg 123 und dem zweiten Steg 124, wobei ausreichende Sicherheitsabstände eingehalten sind. Es liegt im Normalbetrieb somit eine Situation vor, in der die ersten Verriegelungsabschnitte 125 und die zweiten Verriegelungsabschnitte 62 axial beabstandet sind.

Bezug nehmend auf die Figuren 4 bis 6 ist zunächst darauf hinzuweisen, dass sowohl die ersten Verriegelungsabschnitte 125 als auch die zweiten Verriegelungsabschnitte 62 schräg zu einer Ebene ausgerichtet sind, die senkrecht zur Maschinenachse des Turbofantriebwerk verläuft. Dies bedeutet in der in Figur 4 bis 6 dargestellten flach ausgebreiteten Darstellung, dass die Verriegelungsabschnitte 125, 62 einen Winkel α zur Umfangsrichtung u bilden (vgl. Figur 5). Die Umfangsrichtung u wird dabei im betrachteten zylindrischen Koordinatensystem durch den Umfangswinkel ϕ angegeben. Der Winkel α liegt beispielsweise zwischen 5° und 45°, insbesondere zwischen 10° und 30°.

Die Figur 4 illustriert, wie die ersten Verriegelungsabschnitte 125 und die zweiten Verriegelungsabschnitte 62 bei der Montage in die Position des Normalbetriebs gemäß der Figur 3 gebracht werden.

Aufgrund der Schrägstellung der Verriegelungsabschnitte 62, 125 ist es möglich, die ersten Verriegelungsabschnitte 125 in Richtung des Pfeils A, d.h. mit dem Winkel der Schrägstellung zwischen den zweiten Verriegelungsabschnitten 62 hindurch zu schieben. Hierdurch können die ersten Verriegelungsabschnitte 125 an den zweiten Verriegelungsabschnitte 62 in axialer Richtung vorbei bewegt werden, so dass sie im montierten Zustand eine stromabwärtigere axiale Position aufweisen als die zweiten Verriegelungsabschnitte 62.

Die Figur 5 zeigt den fertig montierten Zustand, wenn sich der Fan im Normalbetrieb befindet. Die Verriegelungsabschnitte 125 rotieren entsprechend dem Pfeil B in Umfangsrichtung, während die Verbindungsabschnitte 62 des nicht rotierenden Bauteils 6 ortsfest sind. Aufgrund der axialen Beabstandung zwischen den ersten Verriegelungsabschnitte 125 und den zweiten Verriegelungsabschnitte 62 stehen diese außer Eingriff und können die ersten Verriegelungsabschnitte 125 der Fanscheibe frei rotieren.

In der Figur 5 ist zu erkennen, dass der Abstand d1 in Umfangsrichtung u zwischen den zweiten Verriegelungsabschnitten 62 kleiner ist als die Länge d2 in Umfangsrichtung der ersten Verriegelungsabschnitte 125. Dadurch wird bewirkt, dass die ersten Verriegelungsabschnitte 125 nicht durch eine rein axiale Bewegung axial vor die zweiten Verriegelungsabschnitte 62 geführt werden können. Eine Entflechtung der ersten und zweiten Verriegelungsabschnitte 125, 62 kann nur erfolgen, wenn die ersten Verriegelungsabschnitte in umgekehrter Richtung wie der Figur 4 gezeigt an den zweiten Verriegelungsabschnitte 62 vorbeigeführt werden.

Im Falle eines Bruchs der Niederdruckwelle oder der Fanscheibe laufen die ersten Verriegelungsabschnitte 125 jedoch in der Richtung B weiter. Der von der Niederdruckwelle entkoppelt Fan bewegt sich dabei in axialer Richtung nach vorne. Hierbei geraten die ersten Verriegelungsabschnitte 125, wie in der Figur 6 dargestellt, an der stromabwärtigen Seite der zweiten Verriegelungsabschnitte 62 sukzessive in Anlage an diese. Hierdurch wird der Fan in seiner Rotationsbewegung abgebremst und in seiner axialen Bewegung gestoppt. Es wird auf diese Weise eine Fansicherung bereitgestellt. Dabei ist gemäß einer Ausführungsvariante vorgesehen, dass die stromabwärtige Seite der zweiten Verriegelungsabschnitte 62 und die stromaufwärtige Seite der ersten Verriegelungsabschnitte 125 jeweils glatt ausgebildet ist.

Wie in der Figur 5 dargestellt, weist jeder Verriegelungsabschnitt zwei Stirnflächen auf, die aufgrund der schrägen Ausrichtung der Verriegelungsabschnitte nachfolgend als Vorderkante und Hinterkante bezeichnet werden. So weist der erste Verriegelungsabschnitt 125 eine Vorderkante 125a eine Hinterkante 125b auf. Der zweite Verriegelungsabschnitt weist eine Vorderkante 62a und eine Hinterkante 62b auf.

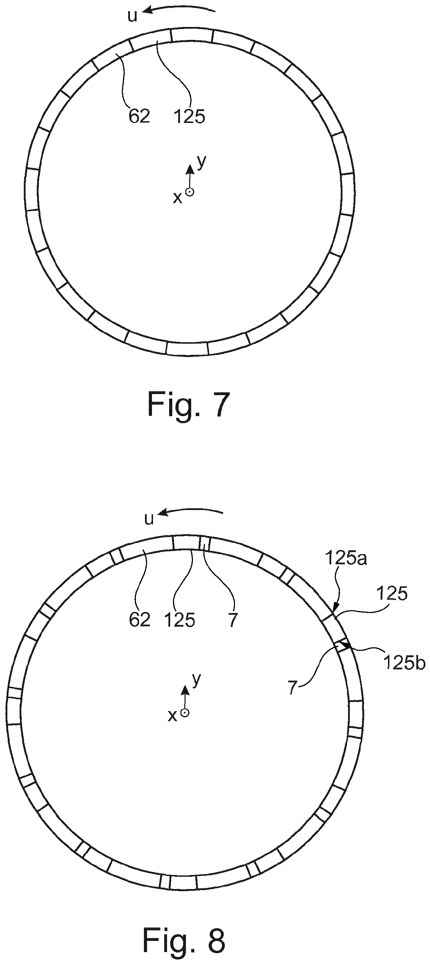

Die Figur 7 zeigt die ringförmig angeordneten ersten und zweiten Verriegelungsabschnitte 125, 62 bei stromaufwärtiger Betrachtung in axialer Richtung zu einem betrachteten Zeitpunkt ihrer Relativbewegung. Es sind die Zylinderkoordinaten x, r und u eingezeichnet. Die Figur 7 zeigt dabei einen Zustand, bei dem die ersten Verriegelungsabschnitte 125 und die zweiten Verriegelungsabschnitte 62 jeweils derart in Umfangsrichtung beabstandet und in der Länge ausgebildet sind, dass sie sich zum dargestellten Zeitpunkt in axialer Richtung stromaufwärts in Umfangsrichtung überlappen. Dabei liegt zu diesem Zeitpunkt eine vollständige Überlappung vor, bei der ein erster Verriegelungsabschnitt 125 an seiner Vorderkante 125a mit einem ersten der Verriegelungsabschnitte 62 überlappt und an seiner Hinterkante 125b mit einem weiteren der zweiten Verriegelungsabschnitte 62 überlappt. Zu anderen Zeitpunkten liegt eine nur einseitige Überlappung vor.

Die Figur 8 zeigt eine dazu unterschiedliche Ausgestaltung, bei der die Länge der ersten Verriegelungsabschnitte 125 in Umfangsrichtung gegenüber der Ausgestaltung der Figur 7 reduziert ist. Bei der Figur 8 ist der Überlappungsgrad zu dem dargestellten Zeitpunkt derart, dass bei Betrachtung in axialer Richtung stromaufwärts ein erster Verriegelungsabschnitt 125 nur an seiner Vorderkante 125a mit einem der zweiten Verriegelungsabschnitte 62 überlappt. Zwischen seiner Hinterkante 125b und dem nächsten zweiten Verriegelungsabschnitt 62 besteht dagegen ein Spalt 7. Zu anderen Zeitpunkten liegt eine vollständige Überlappung oder eine einseitige Überlappung an der Hinterkante 125b vor.

Eine Überlappung der Verriegelungsabschnitte 125, 62 sichert offensichtlich gegen das Lösen des Fans vom Triebwerk bei rein axialer Bewegung des Fans. Durch ihren Abstand in Umfangsrichtung und ihre Länge stellen die ersten Verriegelungsabschnitte 125 und die zweiten Verriegelungsabschnitte 62 sicher, dass der Fan zu jedem Zeitpunkt durch eine mindestens einseitige Überlappung der Verriegelungsabschnitte gesichert ist.

Es wird darauf hingewiesen, dass die ersten Verriegelungsabschnitte 125 und die zweiten Verriegelungsabschnitte 62 in den Figuren 4-8 nur schematisch dargestellt sind.

Insbesondere ist der dargestellte rechteckige Querschnitt nur beispielhaft. Alternativ können die Verriegelungsabschnitte im Querschnitt beispielsweise an ihren Vorder- und Hinterkanten abgerundet sein bzw. zusammenlaufen. Auch die stromauf- und abwärtigen Flächen können abgerundet sein bzw. zusammenlaufen. Auch wird darauf hingewiesen, dass in den Figuren 2-8 der mittlere der dargestellten zweiten Verriegelungsabschnitte länger ausgebildet ist als die beiden daran angrenzenden zweiten Verriegelungsabschnitte. Eine unterschiedliche Länge in Umfangsrichtung der einzelnen zweiten Verriegelungsabschnitte ist jedoch nur optional. Gemäß einer Ausgestaltung sind die zweiten Verriegelungsabschnitte alle gleich lang.

Die vorliegende Erfindung beschränkt sich in ihrer Ausgestaltung nicht auf die vorstehend beschriebenen Ausführungsbeispiele, die lediglich beispielhaft zu verstehen sind, sondern auf den Umfang der angegebenen Ansprüche.

Beispielsweise kann alternativ vorgesehen sein, dass die ersten und zweiten Verriegelungsabschnitte in anderer Weise ausgerichtet, anders geformt und/oder einen anderen Abstand in Umfangsrichtung voneinander aufweisen.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Turbofantriebwerk, das aufweist:
- einen Fan (10), der eine Fanscheibe (12) umfasst,
- eine Niederdruckwelle (81), die mit der Fanscheibe (12) verbunden ist und die den Fan (10) mit einer Niederdruckturbine (70) des Turbofantriebwerk koppelt, und
- ein nichtrotierendes, stromabwärts der Fanscheibe (12) angeordnetes Bauteil (6),
**dadurch gekennzeichnet, dass**
- ein stromabwärtiger Abschnitt (122) der Fanscheibe eine Mehrzahl erster Verriegelungsabschnitte (125) aufweist, die in Umfangsrichtung zueinander beabstandet sind,
- ein stromaufwärtiger Abschnitt (65) des nichtrotierenden, stromabwärts der Fanscheibe (12) angeordneten Bauteils (6) eine Mehrzahl zweiter Verriegelungsabschnitte (62) aufweist, die in Umfangsrichtung zueinander beabstandet sind, wobei
- die ersten und die zweiten Verriegelungsabschnitte (125, 62) derart ausgebildet und zueinander angeordnet sind, dass die ersten und die zweiten Verriegelungsabschnitte (125, 62) im Normalbetrieb außer Eingriff stehen, wobei die ersten Verriegelungsabschnitte (125) eine stromabwärtigere axiale Position aufweisen als die zweiten Verriegelungsabschnitte (62),
- die ersten Verriegelungsabschnitte (125) und die zweiten Verriegelungsabschnitte (62) jeweils derart in Umfangsrichtung beabstandet sind, dass sich ein erster Verriegelungsabschnitt (125) und dazu axial beabstandeter zweiter Verriegelungsabschnitt (62) bei Betrachtung in axialer Richtung stromaufwärts in Umfangsrichtung im Betrieb zu jedem Zeitpunkt überlappen, und
- im Falle eines Bruchs der Niederdruckwelle (81) oder der Fanscheibe (12), wenn die Fanscheibe (12) sich in axialer Richtung stromaufwärts verschiebt, die ersten Verriegelungsabschnitte (125) sich an die zweiten Verriegelungsabschnitte (62) anlegen.

2. Turbofantriebwerk nach Anspruch 1, **dadurch gekennzeichnet, dass** die ersten Verriegelungsabschnitte (125) und die zweiten Verriegelungsabschnitte (62) jeweils schräg zu einer Ebene ausgerichtet sind, die senkrecht zur Maschinenachse (90) des Turbofantriebwerks verläuft.

3. Turbofantriebwerk nach Anspruch 1 oder 2, **dadurch gekennzeichnet, dass** die ersten Verriegelungsabschnitte (125) und die zweiten Verriegelungsabschnitte (62) im Wesentlichen um den gleichen Winkel (α) schräg zu der Ebene, die senkrecht zur Maschinenachse verläuft, ausgerichtet sind.

4. Turbofantriebwerk nach einem der vorangehenden Ansprüche, **dadurch gekennzeichnet, dass** der Winkel (α) zwischen 5° und 45°, insbesondere zwischen 10° und 30° liegt.

5. Turbofantriebwerk nach einem der vorangehenden Ansprüche, **dadurch gekennzeichnet, dass** die ersten Verriegelungsabschnitte (125) und die zweiten Verriegelungsabschnitte (62) als erste und zweite Wandabschnitte ausgebildet sind, die sich jeweils schräg zur Umfangsrichtung und in radialer Richtung erstrecken.

6. Turbofantriebwerk nach einem der vorangehenden Ansprüche, **dadurch gekennzeichnet, dass** die ersten Verriegelungsabschnitte (125) an einem ersten Steg (123) ausgebildet sind, der in axialer Richtung stromabwärts von der Fanscheibe (12) absteht und sich von diesem radial nach außen erstrecken.

7. Turbofantriebwerk nach einem der vorangehenden Ansprüche, **dadurch gekennzeichnet, dass** die zweiten Verriegelungsabschnitte (62) sich von einer strömungspfadbegrenzenden Struktur (65) des nichtrotierenden Bauteils (6) radial nach innen erstrecken.

8. Turbofantriebwerk nach einem der Ansprüche 1 bis 5, **dadurch gekennzeichnet, dass** die ersten Verriegelungsabschnitte an einem ersten Steg ausgebildet sind, der in axialer Richtung stromabwärts von der Fanscheibe (12) absteht und sich von diesem radial nach innen erstrecken.

9. Turbofantriebwerk nach Anspruch 8, **dadurch gekennzeichnet, dass** die zweiten Verriegelungsabschnitte sich von einer Struktur des nichtrotierenden Bauteils (6) radial nach außen erstrecken.

10. Turbofantriebwerk nach einem der vorangehenden Ansprüche, **dadurch gekennzeichnet, dass** die Fanscheibe (12) einen in axialer Richtung stromabwärts vorstehenden zweiten Steg (124) ausbildet, der radial außen der zweiten Verriegelungsabschnitte (62) angeordnet ist.

11. Turbofantriebwerk nach einem der vorangehenden Ansprüche, **dadurch gekennzeichnet, dass** die ersten Verriegelungsabschnitte (125) und die zweiten Verriegelungsabschnitte (62) ringförmig angeordnet sind.

12. Turbofantriebwerk nach einem der vorangehenden Ansprüche, **dadurch gekennzeichnet, dass** die ersten Verriegelungsabschnitte (125) und die zweiten Verriegelungsabschnitts (62) jeweils derart ausgerichtet und in Umfangsrichtung beabstandet sind, dass die ersten Verriegelungsabschnitte (125) zur Montage in schräger Richtung (A) zwischen den zweiten Verriegelungsabschnitten (62) hindurch schiebbar sind, so dass im Normalbetrieb die ersten Verriegelungsabschnitte (125) eine stromabwärtigere axiale Position aufweisen als die zweiten Verriegelungsabschnitte (62).

13. Turbofantriebwerk nach einem der vorangehenden Ansprüche, **dadurch gekennzeichnet, dass** die zweiten Verriegelungsabschnitte (62) an der axial vorderen Stirnseite des nichtrotierenden, stromabwärts der Fanscheibe (12) angeordneten Bauteils (6) ausgebildet sind.

14. Turbofantriebwerk nach einem der vorangehenden Ansprüche, **dadurch gekennzeichnet, dass** der stromabwärtige Abschnitt (122) der Fanscheibe (12), der die ersten Verriegelungsabschnitte (125) aufweist, und der stromaufwärtige Abschnitt (65) des nichtrotierenden Bauteils (6), der die zweiten Verriegelungsabschnitte (62) aufweist, eine nabennahe Schnittstelle (61) zwischen der Fanscheibe (12) und dem nichtrotierenden Bauteil (6) bilden.

## Claims

1. Turbofan engine which has:
- a fan (10) which comprises a fan disc (12),
- a low-pressure shaft (81) which is connected to the fan disc (12) and which couples the fan (10) to a low-pressure turbine (70) of the turbofan engine, and
- a non-rotating component (6) which is arranged downstream of the fan disc (12),
**characterized in that**
- a downstream portion (122) of the fan disc has a plurality of first locking portions (125) which are spaced apart from one another in the circumferential direction,
- an upstream portion (65) of the non-rotating component (6) arranged downstream of the fan disc (12) has a plurality of second locking portions (62) which are spaced apart from one another in the circumferential direction, wherein
- the first and the second locking portions (125, 62) are formed and arranged with respect to one another in such a way that the first and the second locking portions (125, 62) are out of engagement in normal operation, wherein the first locking portions (125) have a more downstream axial position than the second locking portions (62),
- the first locking portions (125) and the second locking portions (62) are each spaced apart in the circumferential direction in such a way that a first locking portion (125) and a second locking portion (62), which is spaced apart axially therefrom when viewed upstream in the axial direction, overlap in the circumferential direction in operation at all times, and
- in the event of a breakage of the low-pressure shaft (81) or of the fan disc (12), if the fan disc (12) is displaced upstream in the axial direction, the first locking portions (125) are applied to the second locking portions (62).

2. Turbofan engine according to Claim 1, **characterized in that** the first locking portions (125) and the second locking portions (62) are each oriented obliquely to a plane which extends perpendicularly to the machine axis (90) of the turbofan engine.

3. Turbofan engine according to Claim 1 or 2, **characterized in that** the first locking portions (125) and the second locking portions (62) are oriented substantially by the same angle (α) obliquely to the plane which extends perpendicularly to the machine axis.

4. Turbofan engine according to one of the preceding claims, **characterized in that** the angle (α) is between 5° and 45°, in particular between 10° and 30°.

5. Turbofan engine according to one of the preceding claims, **characterized in that** the first locking portions (125) and the second locking portions (62) are designed as first and second wall portions which each extend obliquely to the circumferential direction and in the radial direction.

6. Turbofan engine according to one of the preceding claims, **characterized in that** the first locking portions (125) are formed on a first web (123), which projects from the fan disc (12) downstream in the axial direction, and extend radially outwardly from said web.

7. Turbofan engine according to one of the preceding claims, **characterized in that** the second locking portions (62) extend radially inwardly from a flow path-delimiting structure (65) of the non-rotating component (6).

8. Turbofan engine according to one of Claims 1 to 5, **characterized in that** the first locking portions are formed on a first web, which projects from the fan disc (12) downstream in the axial direction, and extend radially inwardly from said web.

9. Turbofan engine according to Claim 8, **characterized in that** the second locking portions extend radially outwardly from a structure of the non-rotating component (6).

10. Turbofan engine according to one of the preceding claims, **characterized in that** the fan disc (12) forms a second web (124) which projects downstream in the axial direction and which is arranged radially to the outside of the second locking portions (62).

11. Turbofan engine according to one of the preceding claims, **characterized in that** the first locking portions (125) and the second locking portions (62) are arranged in a ring shape.

12. Turbofan engine according to one of the preceding claims, **characterized in that** the first locking portions (125) and the second locking portions (62) are each oriented and spaced apart in the circumferential direction in such a way that, for mounting in the oblique direction (A), the first locking portions (125) can be slid through between the second locking portions (62), with the result that, in normal operation, the first locking portions (125) have a more downstream axial position than the second locking portions (62).

13. Turbofan engine according to one of the preceding claims, **characterized in that** the second locking portions (62) are formed on the axially front end side of the non-rotating component (6) arranged downstream of the fan disc (12).

14. Turbofan engine according to one of the preceding claims, **characterized in that** the downstream portion (122) of the fan disc (12), which portion has the first locking portions (125), and the upstream portion (65) of the non-rotating component (6), which portion has the second locking portions (62), form a near-hub interface (61) between the fan disc (12) and the non-rotating component (6).

## Revendications

1. Turboréacteur, lequel comprend :
- une soufflante (10), laquelle comporte un disque de soufflante (12),
- un arbre basse pression (81), lequel est relié au disque de soufflante (12) et lequel accouple la soufflante (10) à une turbine basse pression (70) du turboréacteur et
- un composant (6) non rotatif disposé en aval du disque de soufflante (12),
**caractérisé en ce que**
- une partie (122) en aval du disque de soufflante comprend une pluralité de premières parties de verrouillage (125) qui sont espacées les unes des autres dans la direction périphérique,
- une partie (65) en amont du composant (6) non rotatif disposé en aval du disque de soufflante (12) comprend une pluralité de deuxièmes parties de verrouillage (62) qui sont espacées les unes des autres dans la direction périphérique,
- les premières et les deuxièmes parties de verrouillage (125, 62) sont réalisées et disposées les unes par rapport aux autres de telle sorte que les premières et les deuxièmes parties de verrouillage (125, 62) sont hors de prise en fonctionnement normal, les premières parties de verrouillage (125) présentant une position axiale plus en aval que les deuxièmes parties de verrouillage (62),
- les premières parties de verrouillage (125) et les deuxièmes parties de verrouillage (62) sont respectivement disposées dans la direction périphérique de telle sorte qu'une première partie de verrouillage (125) et qu'une deuxième partie de verrouillage (62) espacée axialement de celle-ci se chevauchent à chaque instant dans la direction périphérique lors du fonctionnement lorsque considérées en amont dans la direction axiale, et
- en cas de rupture de l'arbre basse pression (81) ou du disque de soufflante (12), lorsque le disque de soufflante (12) se déplace en amont dans la direction axiale, les premières parties de verrouillage (125) s'appuient contre les deuxièmes parties de verrouillage (62) .

2. Turboréacteur selon la revendication 1, **caractérisé en ce que** les premières parties de verrouillage (125) et les deuxièmes parties de verrouillage (62) sont orientées respectivement de manière oblique par rapport à un plan qui s'étend perpendiculairement à l'axe de machine (90) du turboréacteur.

3. Turboréacteur selon la revendication 1 ou 2, **caractérisé en ce que** les premières parties de verrouillage (125) et les deuxièmes parties de verrouillage (62) sont orientées sensiblement suivant le même angle (a) de manière oblique par rapport au plan qui s'étend perpendiculairement à l'axe de machine.

4. Turboréacteur selon l'une des revendications précédentes, **caractérisé en ce que** l'angle (a) est compris entre 5° et 45°, en particulier entre 10° et 30°.

5. Turboréacteur selon l'une des revendications précédentes, **caractérisé en ce que** les premières parties de verrouillage (125) et les deuxièmes parties de verrouillage (62) sont réalisées en tant que premières et deuxièmes parties de paroi qui s'étendent respectivement de manière oblique par rapport à la direction périphérique et dans la direction radiale.

6. Turboréacteur selon l'une des revendications précédentes, **caractérisé en ce que** les premières parties de verrouillage (125) sont réalisées au niveau d'une première nervure (123) qui fait saillie en aval à partir du disque de soufflante (12) dans la direction axiale et s'étendent radialement vers l'extérieur à partir de celle-ci.

7. Turboréacteur selon l'une des revendications précédentes, **caractérisé en ce que** les deuxièmes parties de verrouillage (62) s'étendent radialement vers l'intérieur à partir d'une structure (65) de limitation de trajet d'écoulement du composant (6) non rotatif.

8. Turboréacteur selon l'une des revendications 1 à 5, **caractérisé en ce que** les premières parties de verrouillage sont réalisées au niveau d'une première nervure qui fait saillie en aval à partir du disque de soufflante (12) dans la direction axiale et s'étendent radialement vers l'intérieur à partir de celle-ci.

9. Turboréacteur selon la revendication 8, **caractérisé en ce que** les deuxièmes parties de verrouillage s'étendent radialement vers l'extérieur à partir d'une structure du composant (6) non rotatif.

10. Turboréacteur selon l'une des revendications précédentes, **caractérisé en ce que** le disque de soufflante (12) forme une deuxième nervure (124) faisant saillie en aval dans la direction axiale, laquelle deuxième nervure est disposée radialement à l'extérieur des deuxièmes parties de verrouillage (62).

11. Turboréacteur selon l'une des revendications précédentes, **caractérisé en ce que** les premières parties de verrouillage (125) et les deuxièmes parties de verrouillage (62) sont disposées de manière annulaire.

12. Turboréacteur selon l'une des revendications précédentes, **caractérisé en ce que** les premières parties de verrouillage (125) et les deuxièmes parties de verrouillage (62) sont respectivement orientées et espacées dans la direction périphérique de telle sorte que les premières parties de verrouillage (125) peuvent être, pour le montage, déplacées entre les deuxièmes parties de verrouillage (62) et à travers celles-ci dans la direction oblique (A), de telle sorte qu'en fonctionnement normal les premières parties de verrouillage (125) présentent une position axiale plus en aval que les deuxièmes parties de verrouillage (62).

13. Turboréacteur selon l'une des revendications précédentes, **caractérisé en ce que** les deuxièmes parties de verrouillage (62) sont réalisées au niveau du côté frontal axialement avant du composant (6) non rotatif disposé en aval du disque de soufflante (12).

14. Turboréacteur selon l'une des revendications précédentes, **caractérisé en ce que** la partie (122) en aval du disque de soufflante (12) qui comprend les premières parties de verrouillage (125) et la partie (65) en amont du composant (6) non rotatif qui comprend les deuxièmes parties de verrouillage (62) forment une interface (61), proche du moyeu, entre le disque de soufflante (12) et le composant (6) non rotatif.
